# EUROPÄISCHE PATENTSCHRIFT

(11) **EP 3 322 890 B1**
(45) Veröffentlichungstag und Bekanntmachung des Hinweises auf die Patenterteilung: **09.09.2020**
(21) Anmeldenummer: 16735641.9
(22) Anmeldetag: 04.07.2016
(51) Int. Cl.: F02M 37/08, F04D 29/046

(54) **KRAFTSTOFFFÖRDERPUMPE**
FUEL DELIVERY PUMP
POMPE D'ALIMENTATION EN CARBURANT

(30) Priorität: 16.07.2015 DE 102015213420
(43) Veröffentlichungstag der Anmeldung: 23.05.2018
(73) Patentinhaber: Vitesco Technologies GmbH, 30165 Hannover (DE)
(72) Erfinder: VÖLKER, Marc, 39116 Magdeburg (DE); LIMA, Gabriel Simara, 65719 Hofheim am Taunus (DE); MUEHLHAUSEN, Ralf, 36199 Rotenburg (DE)
(86) Internationale Anmeldenummer: PCT/EP2016/065687
(87) Internationale Veröffentlichungsnummer: WO 2017/009082

(56) Entgegenhaltungen:
- EP-A1- 0 549 008
- EP-A1- 0 812 393
- EP-A1- 1 584 812
- CN-Y- 201 202 729
- JP-A- H04 203 287
- JP-A- H04 203 288
- JP-A- 2004 092 484
- US-A- 4 619 588

## Beschreibung

### Technisches Gebiet

Die Erfindung betrifft eine Kraftstoffförderpumpe zum Fördern von Kraftstoff, mit einem Elektromotor und mit einem durch den Elektromotor antreibbaren Pumpenrad, wobei das Pumpenrad derart mittels einer Welle mit einem Rotor des Elektromotors verbunden ist, dass eine Drehbewegung des Rotors über die Welle auf das Pumpenrad übertragen wird, wobei die Welle durch ein Axiallager in axialer Richtung und/oder durch ein Radiallager in radialer Richtung gegenüber einer Pumpenstufe, in welcher das Pumpenrad angeordnet ist, gelagert ist.

### Stand der Technik

Kraftstoffförderpumpen werden sowohl von dem zu fördernden Kraftstoff durchströmt als auch von dem Kraftstoff umströmt. Die in Kraftfahrzeugen verwendeten Kraftstoffförderpumpen weisen Elektromotoren auf, die zum Antrieb der Förderstufe, welche beispielsweise durch ein Pumpenrad gebildet ist, verwendet werden. Um eine Sicherheit gegenüber elektrostatischer Entladungen (ESD) sicherzustellen, müssen die elektrisch leitenden Elemente einer Kraftstoffförderpumpe geerdet sein. Dies dient der Verhinderung von Kurzschlüssen und damit dem Entstehen von Funken, die zu einer Entzündung des Kraftstoffes führen könnten. Weiterhin kann die Funktionsfähigkeit der Kraftstoffförderpumpe durch das Entstehen von elektrostatischen Entladungen beeinträchtigt werden. Zu den zu erdenden Teilen gehören insbesondere die Pumpenstufe, das Gehäuse der Kraftstoffförderpumpe und das Motorgehäuse, in welchem der Rotor und der Stator des Elektromotors angeordnet sind.

Gleichzeitig ist es zu vermeiden, dass die Welle der Kraftstoffförderpumpe, auf welcher die Förderstufe angeordnet ist, mit dem negativen Pol der Spannungsversorgung beziehungsweise mit dem Massepotential kurzgeschlossen wird und somit ebenso geerdet wird. Ein solcher Kurzschluss kann zum Ausfall der Kraftstoffförderpumpe führen oder zu unerwünschten Ablagerungen an der Welle oder dem Rotor, insbesondere in der Nähe der Kohlebürsten. Dies kann zu einer negativen Beeinträchtigung der Lebensdauer der Kraftstoffförderpumpe führen.

Im Stand der Technik sind unterschiedliche Vorrichtungen bekannt, die mögliche Lösungen des Problems aufzeigen. So sind Kraftstoffförderpumpen bekannt, die zusätzliche Widerstände aufweisen, um eine ausreichende Erdung bzw. Entkopplung zu erreichen. Auch sind Kraftstoffförderpumpen bekannt, die eine Pumpenstufe aus Kunststoff aufweisen, wodurch eine Isolation der Welle erreicht werde kann. Weiterhin sind Kraftstoffförderpumpen bekannt, die eine Erdung des Motorgehäuses und somit auch eine Erdung der Welle vorsehen.

Nachteilig an den Vorrichtungen im Stand der Technik ist insbesondere, dass entweder keine ausreichende Sicherheit gegen elektrostatische Entladungen erreicht werden kann oder durch die Erdung des Motorgehäuses auch eine Erdung der Welle erzeugt wird, wodurch sich Ablagerungen im Inneren des Elektromotors ergeben können. Die Ausführung der Pumpenstufe als Kunststoffbauteil führt zu einer niedrigeren Stabilität und somit zu einer verkürzten Lebensdauer.

Die JP H04 203287 A, JP 2004 092484 A, JP H04 203288 A, CN 201 202 729 Y und die US 4 619 588 A betreffen Kraftstoffförderpumpen und Lagerungen von Wellen mit dran angeordneten Pumpenrädern.

### Darstellung der Erfindung, Aufgabe, Lösung, Vorteile

Daher ist es die Aufgabe der vorliegenden Erfindung eine Kraftstoffförderpumpe zu schaffen, welche eine ausreichende Sicherheit gegen elektrostatische Entladungen aufweist und gleichzeitig eine elektrische Entkopplung der Welle gegenüber den geerdeten Elementen aufweist.

Die Aufgabe hinsichtlich der Kraftstoffförderpumpe wird durch eine Kraftstoffförderpumpe mit den Merkmalen von Anspruch 1 gelöst.

Erfindungsgemäß wird eine Kraftstoffförderpumpe zum Fördern von Kraftstoff offenbart, mit einem Elektromotor und mit einem durch den Elektromotor antreibbaren Pumpenrad, wobei das Pumpenrad derart mittels einer Welle mit einem Rotor des Elektromotors verbunden ist, dass eine Drehbewegung des Rotors über die Welle auf das Pumpenrad übertragen wird, wobei die Welle durch ein Axiallager in axialer Richtung gegenüber einer Pumpenstufe, in welcher das Pumpenrad angeordnet ist, gelagert ist, wobei zwischen dem Axiallager und der Pumpenstufe ein elektrisches Isolationselement angeordnet ist, und wobei das elektrische Isolationselement zwischen dem Axiallager und der Pumpenstufe durch ein topfförmiges Element gebildet ist.

Bevorzugt ist sowohl zwischen dem Radiallager und der Pumpenstufe als auch zwischen dem Axiallager und der Pumpenstufe ein elektrisches Isolationselement angeordnet. Hierdurch kann eine umfassende elektrische Isolation der Welle erreicht werden.

Durch die Anordnung von elektrischen Isolationselementen zwischen dem Axiallager und der Pumpenstufe und/oder zwischen dem Radiallager und der Pumpenstufe kann eine elektrische Isolation der Welle von der Pumpenstufe und somit von dem Gehäuse der Kraftstoffförderpumpe und dem Motorgehäuse erzeugt werden. Dies ist besonders vorteilhaft, um Ablagerungen im Bereich der Welle aufgrund einer Polarität der Welle zu vermeiden. Durch die elektrische Isolation kann das Gehäuse der Kraftstoffförderpumpe, das Motorgehäuse und die Pumpenstufe mit dem negativen Pol der Spannungsversorgung beziehungsweise dem Massenpotential verbunden werden und somit einer Erdung der genannten Elemente erreicht werden. Dies ist vorteilhaft, um Kurzschlüsse und elektrostatische Entladungen zu vermeiden.

Das Motorgehäuse kann beispielsweise durch den Stator des Elektromotors gebildet sein. Ebenso kann eine käfigartige Struktur um den Stator herum angeordnet sein, welche als Motorgehäuse fungiert. Durch das Einsetzten des Elektromotors in das Gehäuse der Kraftstoffförderpumpe ist der Elektromotor auch ohne ein geschlossenes eigenes Gehäuse ausreichend gegen mechanische Störeinflüsse geschützt.

Besonders vorteilhaft ist es, wenn das Radiallager als elektrisches Isolationselement ausgebildet ist. Um ein zusätzliches Isolationselement einzusparen, kann das Radiallager neben der Funktion der Lagerung auch die Funktion der elektrischen Isolation übernehmen. Hierzu kann das Radiallager besonders bevorzugt aus einem elektrisch nicht leitfähigen Material ausgebildet sein. Beispielsweise können die Lagerschalen aus Kunststoff oder einer nicht leitfähigen Keramik ausgebildet sein. Auch kann das Radiallager mit einer elektrisch nicht leitfähigen Beschichtung beschichtet sein.

Das elektrische Isolationselement zwischen dem Axiallager und der Pumpenstufe ist durch ein topfförmiges Element gebildet. Ein topfförmiges Element ist vorteilhaft, um einen sicheren Sitz des Axiallagers zu gewährleisten und darüber hinaus eine einfache Montage des Isolationselementes zu ermöglichen. Hierzu kann ein passgenauer Ausschnitt im unteren Abschnitt der Pumpenstufe vorgesehen werden, in welchen das Isolationselement eingesetzt oder eingepresst werden kann.

Die Pumpenstufe ist bevorzugt durch ein zweiteiliges Gehäuse gebildet, welches den unteren Abschluss des Gehäuses der Kraftstoffförderpumpe bildet. In der Pumpenstufe ist das Pumpenrad angeordnet. Die Pumpenstufe weist zusätzlich Öffnungen zum Ansaugen und Ausstoßen des zu fördernden Fluids auf.

Auch ist es zu bevorzugen, wenn das Axiallager durch einen kugelförmigen Körper gebildet ist, wobei der kugelförmige Körper in dem topfförmigen elektrischen Isolationselement angeordnet ist. Ein kugelförmiger Körper ist vorteilhaft, da die Welle in axialer Richtung abgestützt und gelagert werden kann, wobei nur eine sehr geringe Kontaktfläche zwischen der Welle und dem kugelförmigen Körper entsteht. Der kugelförmige Körper kann bevorzugt in die Aussparung der Pumpenstufe, in welche bereits das Isolationselement eingesetzt ist, eingepresst werden, so dass der kugelförmige Körper fest in der Pumpenstufe aufgenommen ist. Alternativ ist auch ein Abgleiten des kugelförmigen Körpers auf dem Isolationselement vorsehbar, wodurch das Axiallager letztlich sowohl durch den kugelförmigen Körper als auch durch das topfförmige Isolationselement gebildet wird.

Darüber hinaus ist es vorteilhaft, wenn das elektrische Isolationselement durch eine elektrisch nicht leitfähige Beschichtung gebildet ist. Eine elektrisch nicht leitfähige Beschichtung der Pumpenstufe im Bereich des Axiallagers und/oder des Radiallagers ist vorteilhaft, da somit ebenfalls eine elektrische Isolation erreicht werden kann. Die Beschichtung ist bevorzugt durch elektrisch nicht leitfähige Materialien, wie beispielsweise Kunststoff oder Keramik gebildet.

Weiterhin ist es vorteilhaft, wenn zumindest eines der elektrischen Isolationselemente aus einem Kunststoff und/oder einer Keramik gebildet ist. Dabei ist es insbesondere vorteilhaft, wenn zumindest eines der elektrischen Isolationselemente aus einem thermoplastischen Material gebildet ist.

Darüber hinaus ist es vorteilhaft, wenn zwischen der Welle und der Pumpenstufe ein elektrisch nicht leitfähiges Dichtungselement angeordnet ist. Das Dichtungselement kann beispielsweise eine Keramik sein oder ein Gummielement. Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von einem Ausführungsbeispiel unter Bezugnahme auf die Zeichnungen detailliert erläutert. In den Zeichnungen zeigen:
- Fig. 1: eine Prinzipskizze, die eine Anordnung einer Kraftstoffförderpumpe in einem Kraftstofftank zeigt,
- Fig. 2: eine Detailansicht des unteren Abschnitts der Pumpenstufe, wobei insbesondere das topfförmige Isolationselement und der kugelförmige Körper, der als Axiallager dient, gezeigt sind, und
- Fig. 3: eine Schnittansicht durch eine Kraftstoffförderpumpe, wobei ein elektrisch nicht leitfähiges Radiallager zwischen der Welle und der Pumpenstufe angeordnet ist und ein elektrisch nicht leitfähiges topfförmiges Isolationselement zwischen dem nach unten gerichteten axialen Endbereich der Welle und der Pumpenstufe angeordnet ist.

### Bevorzugte Ausführung der Erfindung

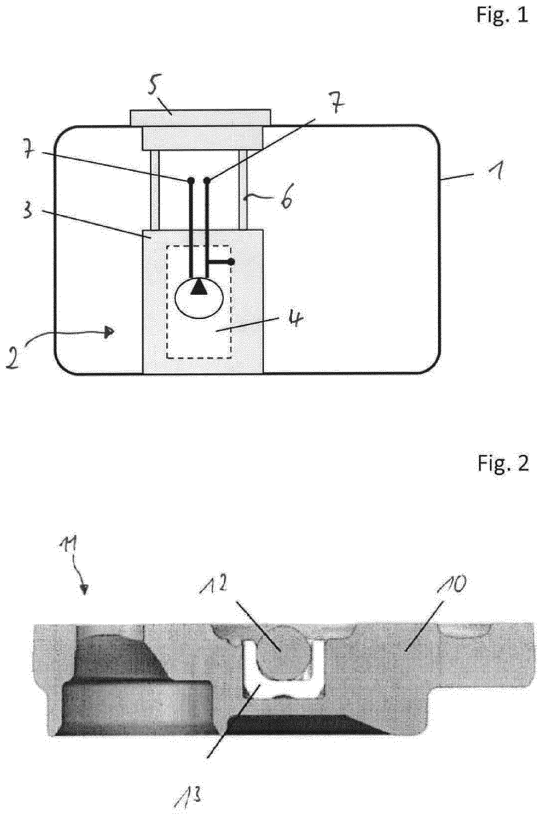

Die Figur 1 zeigt eine schematische Ansicht eines Kraftstofftanks 1 in einem nicht dargestellten Kraftfahrzeug. Im Kraftstofftank 1 ist eine Kraftstofffördereinheit 2 angeordnet, die aus einem Schwalltopf 3, einer Kraftstoffförderpumpe 4 und einem Flansch 5 gebildet ist. Der Flansch 5 dient der Befestigung der Kraftstofffördereinheit 2 an dem Kraftstofftank 1. Der Schwalltopf 3, welcher ein Reservoir für den Kraftstoff darstellt und aus welchem der Kraftstoff durch die Kraftstoffförderpumpe 4 zum Verbrennungsmotor gefördert wird, ist mittels Verbindungselementen 6 mit dem Flansch 5 verbunden. Der Schwalltopf 3 ist weiterhin gegenüber der unteren Wandung des Kraftstofftanks 1 abgestützt.

Die Kraftstoffförderpumpe 4 ist innerhalb des Schwalltopfes 3 angeordnet und über elektrische Leiter 7 mit einer Spannungsquelle verbunden. Sowohl die Kraftstoffförderpumpe 4 als auch die elektrischen Leiter 7 sind von dem Kraftstoff im Kraftstofftank 1 umspült. Daher ist zur Gewährleistung der Betriebssicherheit eine Erdung der metallischen mit dem Kraftstoff in Kontakt stehenden Elemente notwendig.

Die Figur 2 zeigt eine Detailansicht des unteren Abschnitts 10 einer Pumpenstufe 11. Die Pumpenstufe 11 ist regelmäßig zweiteilig ausgeführt und weist in ihrem Inneren eine Ausnehmung zur Aufnahme des Pumpenrades auf. Die Pumpenstufe 11 weist zusätzlich Öffnungen auf, durch welchen Kraftstoff in die Pumpenstufe 11 hinein gefördert werden kann und aus der Pumpenstufe heraus gefördert werden kann.

Der Abschnitt 10 weist einen kugelförmigen Körper 12 auf, welcher als axialer Lagersitz für eine darüber angeordnete und in Figur 2 nicht gezeigte Welle dient. Der kugelförmige Körper 12 ist bevorzugt aus einem abriebfesten Material erzeugt. Vorzugsweise ist der kugelförmige Körper 12 aus einem metallischen Material gebildet. Der kugelförmige Körper 12 ist in einem topfförmigen Element 13 angeordnet, welches den kugelförmigen Körper 12 zum Abschnitt 10 beabstandet. Das topfförmige Element 13 ist bevorzugt aus einem elektrisch nicht leitfähigen Material gebildet und dient insbesondere der elektrischen Isolation des kugelförmigen Körpers 12 und der mit dem kugelförmigen Körper 12 in elektrisch leitender Verbindung stehenden nicht gezeigten Welle, auf welcher das Pumpenrad angeordnet ist. Das topfförmige Element 13 bildet somit ein elektrisches Isolationselement aus.

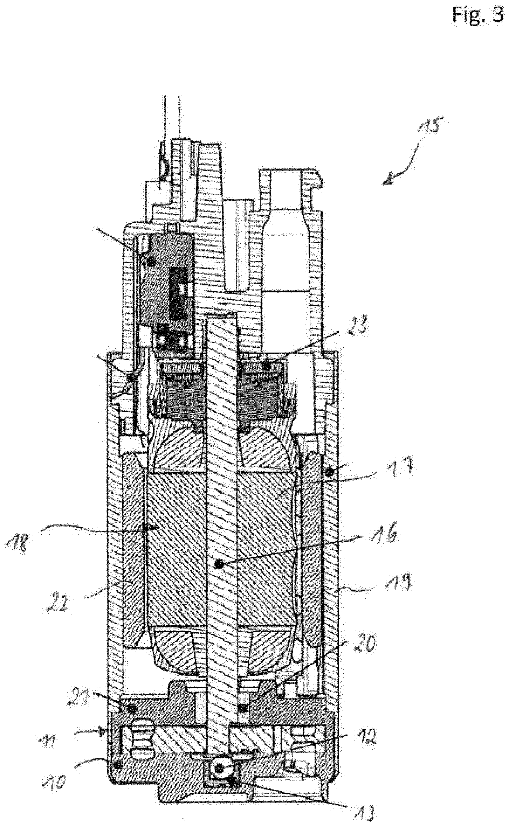

Die Figur 3 zeigt eine Schnittansicht durch eine Kraftstoffförderpumpe 15. Zentral in der Kraftstoffförderpumpe 15 ist eine Welle 16 angeordnet, welche mit dem Rotor 17 des Elektromotors 18 verbunden ist und drehbar im Gehäuse 19 der Kraftstoffförderpumpe 15 gelagert ist.

Die Welle 16 ist einerseits durch ein Radiallager 20 gelagert und andererseits durch ein Axiallager, welches durch den kugelförmigen Körper 12 gebildet ist, der bereits in Figur 2 gezeigt wurde.

Insbesondere das Gehäuse 19 der Kraftstoffförderpumpe 15, die Pumpenstufe 11 und der Stator 22 sind mit dem negativen Pol der Spannungsversorgung beziehungsweise insbesondere mit dem Massenpotential verbunden, um eine Erdung der Elemente sicherzustellen.

Das Radiallager 20 ist in den oberen Abschnitt 21 der Pumpenstufe 11 integriert und ist bevorzugt durch ein elektrisch isolierendes Material gebildet. Auf diese Weise wird eine elektrisch leitende Verbindung zwischen der Welle 16 und der Pumpenstufe 11 verhindert. Alternativ kann zwischen dem Radiallager 20 und der Pumpenstufe 11 beziehungsweise dem oberen Abschnitt 21 auch eine elektrisch isolierende Schicht oder ein elektrisches Isolationselement angeordnet sein.

Durch die Kombination eines elektrisch nicht leitfähigen Radiallagers 20 oder eines Isolationselementes zwischen dem Radiallager 20 und der Pumpenstufe 11 und dem topfförmigen Körper 13 aus einem elektrisch isolierenden Material, ist eine elektrische Isolation der Welle 16 gegenüber den geerdeten Elemente der Kraftstoffförderpumpe 15 erreicht. Dies verhindert insbesondere das Entstehen von Ablagerungen an der Welle 16 und insbesondere im Bereich der Kohlebürsten 23 des Elektromotors 18, was zu einer verbesserten Lebensdauer der gesamten Kraftstoffförderpumpe 15 beiträgt.

Das Ausführungsbeispiel der Figuren 1 bis 3 weist insbesondere keinen beschränkenden Charakter auf und dient der Verdeutlichung des Erfindungsgedankens. Auch vielfältige abweichende konstruktive Gestaltungen und Formgebungen können im von der Erfindung umfassten Rahmen realisiert werden, ohne dabei von dem Grundgedanken der Erfindung abzuweichen. Die Ausführung der Figuren 2 und 3 ist beispielhaft und verdeutlicht eine besonders vorteilhafte Möglichkeit eine Isolation der Welle von den elektrisch geerdeten Elementen der Kraftstoffförderpumpe zu erreichen ohne dabei die Lebensdauer der Kraftstoffförderpumpe durch eine ungünstige Materialwahl, beispielsweise durch Kunststoffe für das Gehäuse und/oder die Pumpenstufe, negativ zu beeinflussen.

## Patentansprüche

1. Kraftstoffförderpumpe (4, 15) zum Fördern von Kraftstoff, mit einem Elektromotor (18) und mit einem durch den Elektromotor (18) antreibbaren Pumpenrad, wobei das Pumpenrad derart mittels einer Welle (16) mit einem Rotor (17) des Elektromotors (18) verbunden ist, dass eine Drehbewegung des Rotors (17) über die Welle (16) auf das Pumpenrad übertragen wird, wobei die Welle (16) durch ein Axiallager (12) in axialer Richtung gegenüber einer Pumpenstufe (11), in welcher das Pumpenrad angeordnet ist, gelagert ist, wobei zwischen dem Axiallager (12) und der Pumpenstufe (11) ein elektrisches Isolationselement (13) angeordnet ist, und wobei das elektrische Isolationselement (13) zwischen dem Axiallager (12) und der Pumpenstufe (11) durch ein topfförmiges Element (13) gebildet ist.

2. Kraftstoffförderpumpe (4, 15) nach Anspruch 1,
**dadurch gekennzeichnet, dass** die Welle (16) durch ein Radiallager (20) in radialer Richtung gegenüber der Pumpenstufe (11) gelagert ist, wobei zwischen dem Radiallager (20) und der Pumpenstufe (11) ein elektrisches Isolationselement angeordnet ist.

3. Kraftstoffförderpumpe (4, 15) nach Anspruch 1,
**dadurch gekennzeichnet, dass** die Welle (16) durch ein Radiallager (20) in radialer Richtung gegenüber der Pumpenstufe (11) gelagert ist, wobei das Radiallager (20) als elektrisches Isolationselement ausgebildet ist.

4. Kraftstoffförderpumpe (4, 15) nach Anspruch 1, 2 oder 3,
**dadurch gekennzeichnet, dass** das Axiallager (12) durch einen kugelförmigen Körper (12) gebildet ist, wobei der kugelförmige Körper (12) in dem topfförmigen elektrischen Isolationselement (13) angeordnet ist.

5. Kraftstoffförderpumpe (4, 15) nach einem der Ansprüche 1, 2 oder 4 in Verbindung mit Anspruch 1 oder 2,
**dadurch gekennzeichnet, dass** zumindest eines der elektrischen Isolationselemente (13) durch eine elektrisch nicht leitfähige Beschichtung gebildet ist.

6. Kraftstoffförderpumpe (4, 15) nach einem der vorhergehenden Ansprüche, **dadurch gekennzeichnet, dass** zumindest eines der elektrischen Isolationselemente (13) aus einem Kunststoff und/oder einer Keramik gebildet ist.

7. Kraftstoffförderpumpe (4, 15) nach einem der vorhergehenden Ansprüche, **dadurch gekennzeichnet, dass** zumindest eines der elektrischen Isolationselemente (13, 20) aus einem thermoplastischen Material gebildet ist.

8. Kraftstoffförderpumpe (4, 15) nach einem der vorhergehenden Ansprüche, **dadurch gekennzeichnet, dass** zwischen der Welle (16) und der Pumpenstufe (11) ein elektrisch nicht leitfähiges Dichtungselement angeordnet ist.

## Claims

1. Fuel delivery pump (4, 15) for delivering fuel, having an electric motor (18) and having a pump impeller that can be driven by means of the electric motor (18), wherein the pump impeller is connected by means of a shaft (16) to a rotor (17) of the electric motor (18) such that a rotational movement of the rotor (17) is transmitted via the shaft (16) to the pump impeller, wherein the shaft (16) is mounted by means of an axial bearing (12) in an axial direction relative to a pump stage (11) in which the pump impeller is arranged, wherein an electrical insulation element (13) is arranged between the axial bearing (12) and the pump stage (11), and wherein the electrical insulation element (13) between the axial bearing (12) and the pump stage (11) is formed by a pot-shaped element (13).

2. Fuel delivery pump (4, 15) according to Claim 1, **characterized in that** the shaft (16) is mounted by means of a radial bearing (20) in a radial direction relative to the pump stage (11), wherein an electrical insulation element is arranged between the radial bearing (20) and the pump stage (11).

3. Fuel delivery pump (4, 15) according to Claim 1, **characterized in that** the shaft (16) is mounted by means of a radial bearing (20) in a radial direction relative to the pump stage (11), wherein the radial bearing (20) is formed as an electrical insulation element.

4. Fuel delivery pump (4, 15) according to Claim 1, 2 or 3, **characterized in that** the axial bearing (12) is formed by a spherical body (12), wherein the spherical body (12) is arranged in the pot-shaped electrical insulation element (13) .

5. Fuel delivery pump (4, 15) according to one of Claims 1, 2 or 4 in conjunction with claim 1 or 2, **characterized in that** at least one of the electrical insulation elements (13) is formed by an electrically non-conductive coating.

6. Fuel delivery pump (4, 15) according to one of the preceding claims, **characterized in that** at least one of the electrical insulation elements (13) is formed from a plastic and/or a ceramic.

7. Fuel delivery pump (4, 15) according to one of the preceding claims, **characterized in that** at least one of the electrical insulation elements (13, 20) is formed from a thermoplastic material.

8. Fuel delivery pump (4, 15) according to one of the preceding claims, **characterized in that** an electrically non-conductive seal element is arranged between the shaft (16) and the pump stage (11).

## Revendications

1. Pompe d'alimentation de carburant (4, 15) destinée à fournir du carburant, ladite pompe comprenant un moteur électrique (18) et une roue de pompe qui peut être entraînée par le moteur électrique (18), la roue de pompe étant reliée à un rotor (17) du moteur électrique (18) au moyen d'un arbre (16) de sorte qu'un mouvement de rotation du rotor (17) soit transmis à la roue de pompe par le biais de l'arbre (16), l'arbre (16) étant supporté par un palier axial (12) dans la direction axiale par rapport à un étage de pompe (11) dans lequel la roue de pompe est disposée, un élément d'isolation électrique (13) étant disposé entre le palier axial (12) et l'étage de pompe (11), et l'élément d'isolation électrique (13) entre le palier axial (12) et l'étage de pompe (11) étant formé par un élément (13) en forme de coupelle.

2. Pompe d'alimentation en carburant (4, 15) selon la revendication 1, **caractérisée en ce que** l'arbre (16) est supporté par un palier radial (20) dans la direction radiale par rapport à l'étage de pompe (11), un élément d'isolation électrique étant disposé entre le palier radial (20) et l'étage de pompe (11).

3. Pompe d'alimentation en carburant (4, 15) selon la revendication 1, **caractérisée en ce que** l'arbre (16) est supporté par un palier radial (20) dans la direction radiale par rapport à l'étage de pompe (11), le palier radial (20) étant conçu comme un élément d'isolation électrique.

4. Pompe d'alimentation en carburant (4, 15) selon la revendication 1, 2 ou 3, **caractérisée en ce que** le palier axial (12) est formé par un corps sphérique (12), le corps sphérique (12) étant disposé dans l'élément d'isolation électrique (13) en forme de coupelle.

5. Pompe d'alimentation en carburant (4, 15) selon l'une des revendications 1, 2 ou 4 en liaison avec la revendication 1 ou 2, **caractérisée en ce que** l'un au moins des éléments d'isolation électrique (13) est formé par un revêtement électriquement non conducteur.

6. Pompe d'alimentation en carburant (4, 15) selon l'une des revendications précédentes, **caractérisée en ce que** l'un au moins des éléments d'isolation électrique (13) est réalisé à partir d'une matière synthétique et/ou d'une céramique.

7. Pompe d'alimentation en carburant (4, 15) selon l'une des revendications précédentes, **caractérisée en ce que** l'un au moins des éléments d'isolation électrique (13, 20) est formé à partir d'une matière thermoplastique.

8. Pompe d'alimentation en carburant (4, 15) selon l'une des revendications précédentes, **caractérisée en ce qu'**un élément d'étanchéité électriquement non conducteur est disposé entre l'arbre (16) et l'étage de pompe (11).
